# EUROPEAN PATENT APPLICATION

(11) **EP 4 576 784 A1**
(43) Date of publication of application: **25.06.2025**
(21) Application number: 23220143.4
(22) Date of filing: 22.12.2023
(51) Int. Cl.: H04N 21/234, H04N 21/2665, H04N 21/81, H04N 21/2668

(54) **SYSTEM FOR AND METHOD OF GENERATING AND DISPLAYING A LINEAR VIDEO STREAM**

(71) Applicant: Funke Digital GmbH, 10117 Berlin (DE)
(72) Inventor: Rosengart, Frank, 13088 Berlin (DE); Ortiz, Daniel, 49086 Osnabrück (DE); Reusch, Marc, 10961 Berlin (DE)
(74) Representative: Eisenführ Speiser

(57) **Abstract**

The invention relates to a system for and a method of generating and displaying a linear video stream, wherein
a first secondary content server is accessed for providing event class information to the first secondary content server and fetching secondary content information from the first secondary content server and for waiting for a response from the first secondary content server and
in case a negative or no response is received from the first secondary content server, a second secondary content server is accessed for providing event class information to the second secondary content server and fetching secondary content from the second secondary content server and for waiting for a response from the second secondary content server and
streaming secondary content according to secondary content information received from the first secondary content server is triggered, in case a positive response containing secondary content information from the first secondary content server was received, or streaming secondary content according to secondary content information received from the second secondary content server is triggered, in case a negative or no response from the first secondary content server was received but a positive response from the second secondary content server was received or the streaming of the primary content is continued in case a negative or no response from the first secondary content server and a negative or no response from the second secondary content server or any further secondary content server was received.

## Description

The invention relates to displaying a linear video stream on a client device, i.e. user's audio-video player, for instance a television set, a portable device or the like that has access to a data network such as the internet.

Video content that can be watched on an audio-video device, for instance a television set, can be distributed in various ways. On way is traditional broadcasting. An alternative way is unicast streaming as provided by Video-on-Demand (VOD) services. Broadcasted content is broadcasted according to a schedule determined by the broadcaster, for instance a television service provider. A user that wants to watch broadcasted content therefore has to watch the content while the content is transmitted. Recording broadcasted content allows watching the content at a later point of time. However, recoding must occur during transmission of the content and therefore at times that are defined by the broadcaster.

For watching video content via video-on-demand service, a user may access a library of available video content and can trigger streaming of the content to the user's terminal device (i.e. an audio-video-device capable of receiving streamed video content) almost any time.

To facilitate watching (and recoding of) broadcasted video content, electronic program guides (EPG) may be available on a user audio-video-device.

An electronic program guide (EPG) is an interactive on-screen guide provided by television service providers to help users navigate through various channels and view program schedules. It essentially serves as a digital menu for television content, allowing users to browse, search, and select video content to watch at certain point of time. A user may also see video content that is broadcasted in the future and may plan watching or recording that content with the help of the EPG.

An EPG typically displays a grid-like representation that shows channels horizontally and time slots vertically. Each cell in the grid represents a specific video content broadcasted on a particular channel at a given time. The EPG displays information such as the program title, start and end times, a brief description, and sometimes additional details like cast, genre, and ratings.

Users can interact with the EPG using a remote control or other input devices. They can use navigation buttons to move across the grid, selecting different time slots or switching between channels. When a user highlights a specific program, additional options may appear, like scheduling recordings, setting reminders, or accessing more information about the show.

EPGs are constantly updated by the television provider, ensuring that users have accurate and up-to-date information about the schedule and availability of programs. They can also perform other functions, such as displaying recommended or popular shows, providing filters or search options to refine the content displayed, and offering access to video-on-demand services or streaming platforms.

In recent devices not only broadcasted video content is displayed by the EPG but also content from personal channels.

Regarding the term "personal channel," it can refer to different concepts, but in television context, it often refers to the ability of viewers to personalize their viewing experience. Some television providers offer the option to create a personal channel or playlist within the EPG. This allows users to select their favorite shows or content and have them grouped together on a single channel number or a dedicated section of the EPG.

Personal channels can also be curated and compiled by video content providers and may, for instance, be special interest channels for motor sports, nature experience or the like.

With personal channels, users can easily access their preferred content without having to navigate through different channels or search through the EPG every time. Personal channels being displayed in the EPG similar to broadcasted channels, simplify the process of finding and watching preferred video content, providing a personalized and convenient viewing experience.

Personal channels can be customized based on individual preferences, creating a curated channel lineup that suits the viewer's interests. Users can add or remove shows from their personal channel as desired, ensuring they have quick access to the programming they enjoy the most.

In summary, an electronic program guide is an interactive on-screen guide that helps users navigate through available television channels and view program schedules. It allows users to browse, search, and select shows or movies to watch. A personal channel, on the other hand, is a customizable channel or playlist within the EPG that allows users to group their favorite shows together for easy access.

Curated channels are sort of personal channels are supplied as linear video streams composed by the video service provider.

A linear video stream comprises primary sections that represent a primary content that is provided by a primary content server. The linear video stream further comprises secondary sections that comprise secondary content that is provided by one or more secondary content servers. In the video stream, secondary sections are interleaved between subsections of the at least one primary section. Accordingly, in such linear video stream, subsections of primary sections and secondary sections are alternating. A user therefore will view a linear video with alternating primary and secondary content. The primary content may comprise one or more primary content pieces, for instance a plurality of media files to be streamed. Likewise, secondary content may comprise one or more secondary content pieces, for instance a plurality of media files to be streamed.

While the primary content to be streamed may be determined by a predetermined curated session that comprises a sequence of multiple primary content pieces, the secondary content to be placed in a linear video stream is determined during streaming. The sequence of primary content defined in a curated session may be similar to the sequence of content in a broadcasted channel and therefore my contain information about the daytime for playing out a particular primary content item, for instance a particular show. Accordingly, curated channels can be displayed in an EPG similar to broadcasted channels. It is noted that broadcasted channels are also curated. However, in the context of this description, a curated channel is a channel defined as a session, where a user can skip a primary content piece during playback (streaming) and thus influence her or his watching experience while this is not possible in traditional broadcasted channels. As a result, the user experience when watching a curated channel de facto is individual. The de facto individual character of curated channels during playback makes placing secondary content in a curated channel more challenging.

While the primary content typically corresponds to a user's demand - for instance a curated channel the user has chosen via an EPG, the secondary content to be placed within the video stream is determined automatically by the video stream composer.

There is a need for providing a seamless user experience wherein secondary content is placed in a continuous video stream that comprises primary content according to a user's demand. It is an object to enable real time selection and placement of secondary content in response to trigger events that may vary. Preferably, the secondary content matches the primary content and the user's interests. The secondary content may, for instance, complement the experience provided by the primary content.

Finding the secondary content to be placed and dynamically adapting the placement of the secondary content without interrupting the linear video stream is a challenge.

For achieving the object of seamless real-time placement of secondary content in a linear video stream, a system for generating and displaying a linear video stream is provided.

The system comprises a video stream composer that is configured to compose a linear video stream from primary content provided by a primary content server and from secondary content provided by one or more secondary content servers. The video stream composer has a data interface and is configured to transmit data representing a linear video stream to one or more client audio-video devices that at least temporarily are data connected to the video stream composer. The video stream composer also is at least temporarily data connected to at least one primary content server and at least one secondary content server. The video stream composer is configured to transmit data representing a linear video stream to a user's audio-video device. The video stream composer is further configured for receiving and processing data signals representing user interactions from a respective client audio-video device. The video stream composer is configured to compose a linear video stream that represents primary content in accordance with a demand received from a client audio-video device when the video stream composer receives a data signal representing a demand from a client audio-video device. Further, the video stream composer is configured to trigger selection and placement of secondary video content in the linear video stream.

The system further comprises one or more client audio-video devices that are configured for decoding a linear video stream and displaying (replaying) the decoded content of the linear video stream on a display. The client device has a bidirectional data interface for receiving a linear video stream and for transmitting data signals representing user interactions performed on the client device by a client device user. In the context of this description, the client device is an audio video device (AV device) that is configured to convert a linear video stream into video (and sound) signals that in turn are converted into (moving) images to be displayed and sound to be played out.

The system further comprises at least one primary content server that at least temporarily is connected to the video stream composer and that is configured for transmitting data representing primary content to the video stream composer.

The system further comprises at least one secondary content server that at least temporarily is connected to the video stream composer and that is configured for transmitting data identifying secondary content to the video stream composer.

The linear video stream to be composed by the video stream composer thus represents primary content according to a user's demand received from a client device. The linear video stream to be composed by the video stream composer further comprises secondary content wherein the secondary content to be interleaved with the primary content. The secondary content to be placed within the stream of the primary content may relate to the primary content and in particular to certain scenes detected within the primary content. For instance, the secondary content may contain explanations with respect to the primary content or additional information the user might need when watching the primary content. If the primary content for instance is a video stream representing some sort of sports game, the secondary content might contain information about rules that are applicable to a certain scene in the sports game. The secondary content may also comprise advertisements or previews of other primary content.

The secondary content to be placed in a placement interval is determined by the video stream composer as follows:
The video stream composer is configured to interrupt primary sections of the linear video stream for interleaving secondary content during a placement interval that is triggered by a trigger event. The primary section of the linear video stream is only interrupted in case, secondary content is to be placed. Accordingly, the duration of the placement interval may vary and may be zero, i.e. the not interruption of a primary section of the linear video stream may occur, if no matching secondary content is found on any respective secondary content server.

The primary content of the linear video stream corresponds to a selection by a user, for instance a selection of a curated channel made via an electronic program guide. The secondary content to be placed in the linear video stream is selected by the video stream composer.

According to a first aspect, for selecting and placing the secondary content, the video stream composer is configured
- for triggering a pre-placement interval anteceding a predetermined trigger event in the streamed primary content
- for accessing a first secondary content server for fetching secondary content information from the first secondary content server and for providing event class information to the first secondary content server, waiting for a secondary content server response containing secondary content information from the first secondary content server and
- in case a negative or no secondary content server response is received from the first secondary content server, for accessing a second secondary content server - that is different from the first secondary content server - for providing event class information to the second secondary content server and fetching secondary content information from the second secondary content server and for, and waiting for a response containing secondary content information from the second secondary content server and
- for triggering streaming secondary content according to secondary content information received from the first secondary content server, in case a positive response from the first secondary content server was received or streaming secondary content according to secondary content information received from the second secondary content server, in case a negative or no response from the first secondary content server was received but a response from the second secondary content server was received or not to interrupt and thus continuing streaming of the primary content in case a negative or no response from the first secondary content server and a negative or no response from the second secondary content server or any further secondary content server was received.

The secondary content information that is contained in a positive response from a secondary content server may comprise a content identifier for the secondary content to be placed. The content identifier enables the video stream composer to obtain the identified secondary content from a content delivery network (CDN).

Accordingly, a "positive" response from a secondary content server is a response containing a content identifier for the secondary content - or the secondary content itself and optionally further information such as information regarding quartiles of the secondary content.

A "negative" response is a response from a secondary content server that the secondary content server will not provide placement information under the conditions set out in the event class information provided by the video stream composer..

Each secondary content server may be configured for determining the secondary content to be placed in the placement interval in a real time bidding process.

According to a preferred embodiment, a sequence of accessing the secondary media content servers during the pre-placement interval is defined by settings stored in the video stream composer. Preferably, at least two different sequences of accessing the secondary media content servers during the pre-placement interval are defined by settings stored in the video stream composer and wherein the video stream composer is configured to apply the sequences alternatingly according to a ratio that is also defined by the settings stored in the video stream composer

The primary content preferably forms a curated channel and wherein the curated channel is configured to be displayed in an electronic program guide of a client AV device. As pointed out herein, some primary content that is part of a curated channel may be primary content that represents a live event, for instance a sports game.

The secondary content information provided with a positive response from a secondary content server preferably comprises a content identifier identifying an individual secondary content to be place in the placement interval defining the respective intermediate section of the linear video stream.

In case a secondary content server determines secondary content to be placed upon a trigger event, the secondary content sever transmits data related to the secondary content to be placed, for instance a content identifier for the secondary content to be placed in the placement interval.. The data may comprise information about the duration of the secondary content and data about quartiles of the secondary content.

The secondary content server may further provide a link to a secondary content source, for instance a data delivers network (CDN). This enables the video stream composer to fetch data for the streaming of the secondary content. For fetching secondary content from a content delivers network, the content identifier can be used.

Accordingly, a positive response from a secondary server may at least include a content identifier that can be used by the video stream composer for obtaining the secondary content to be placed in the placement interval.

The duration of the placement interval for placing secondary content varies and depends on the secondary content to be placed. In case the video stream composer receives no positive answer from any of the secondary content servers addressed in the placement interval, the duration of the placement interval will be zero, i.e. the streaming of primary content is not interrupted by a placement interval. Dynamic adaptation of the placement interval including skipping of a placement interval is one aspect of the invention.

The primary content to be streamed may be defined by a curated session that comprises a curated sequence of a plurality of primary content pieces. Accordingly, it is preferred that the primary content represents a curated channel that can be displayed by means of an electronic program guide (EPG). In a curated channel a user can pause or skip playback of primary content pieces. As a consequence, the played back curated channel will be individual and may not correspond to the schedule shown in the EPG.

In a preferred embodiment, the video stream composer is configured for providing a stitching service. For instance, the video stream composer may comprise a stitching unit. The stitching unit is configured to interleave secondary content between subsections of primary content in a seamless manner. Stitching of secondary content may be performed as known from server-side ad insertion.

In a further preferred embodiment, the video stream composer comprises a trigger event detector. Trigger event detection may thus occur dynamically and depend on the actually played-back primary video content. Trigger event detection may also depend on the individual client device and/or user to which the linear video stream is streamed.

In another preferred embodiment, the video stream composer is configured to perform - via the trigger event detector - trigger event detection and to trigger a pre-placement interval prior to a detected trigger event. Accordingly, an outgoing primary content stream (to the client device) is delayed with respect to an incoming primary content stream (from a primary content source to the video stream composer) for a time delay having a time delay duration that corresponds at least to the duration of the pre-placement interval plus the duration needed for trigger event detection.

Event detection may include detecting particular content - for instance scenes or events - that is represented in the streamed primary content. If the streamed primary content for instance represents a live soccer game, an event to be detected could be a goal. Detection of such events may be performed by means of a trained neural network that is trained for scenes or events to be detected. Such detecting neural network may be trained to process the video signal that is encoded in the linear video stream or the audio signal that is encoded in the linear video stream or both, the video signal and the audio signal that is encoded linear video stream. Event detection thus can be facilitated by analyzing for instance comments made by a reporter that are simultaneously transmitted together with the video content.

In case the system and the method are configured to detect trigger events in a live video stream, delaying the live video stream would be unfortunate. Accordingly, trigger events detected in a live video stream cannot give raise to a pre-placement interval that begins a predetermined number of seconds before the trigger event. Rather, a detected trigger event in a live video stream immediately triggers the placement interval.

In order to solve the problem that no anteceding pre-placement interval can be used in a live video stream prior to a live trigger event, the video stream composer is configured to predetermine secondary content to be placed in response to a trigger event in a live video stream minutes or even hours before such trigger event is to be expected, for instance at the beginning or before the beginning of a halftime of a soccer game. In such case, the video stream composer would access the secondary content servers for providing the secondary content servers with event class information about a live trigger event to be detected by the event detector, for instance an event detecting neural network. The secondary content information, for instance the secondary content identifier, received in response to such access then will be used in case the live trigger event occurs and is detected by the trigger event detector. The difference between this concept and the previously described concept is that in the previously described concept the pre-placement interval always is triggered prior to a trigger event that definitely occurs and that can be detected by pre-analyzing the video content prior to streaming to the user.

In the context of detecting live events in a live video stream, no pre-placement interval is triggered for potential live events to be detected by the event detector because a live video stream should not be delayed and therefore cannot be pre-analyzed. Instead of using a pre-placement interval for determining secondary content replaced in the placement interval triggered by a live trigger event, secondary content to be placed tentatively is predetermined and will be placed in case the live trigger event actually occurs and is detected. Since different kinds of live trigger events may occur, for each kind of live trigger event (corresponding to event classes a detecting neural network may be trained for) a particular secondary content may be predetermined. Thus, the secondary content to be placed in response to a detected goal in a soccer game, may depend upon which team has made the goal. One potential trigger event in this example would be a goal of team A and another expected live trigger event would be a goal of team B and for each of the different live trigger events, an individual secondary content to be placed in the placement interval triggered by the live trigger event is predetermined.

A system that provides trigger event detection and live stream and places predetermined secondary content in dependence of a detected live event, preferably in dependence of the type of detected live event is an aspect that may be implemented independently from other aspects that included secondary content determination in a pre-placement interval as disclosed above. However, the two aspects can be combined. If the curated channel is, for instance, a sports channel, the curated channel may include live playback of a soccer game (where the content is not a priori known) and other primary content such as portraits of players or teams or reports on past games, where the primary content is a priori known - or at least can be pre-analyzed and delayed as disclosed above..

According to another aspect, a method of generating and displaying a linear video stream is proposed. The linear video stream to be generated is composed of main sections and intermediate sections. The main sections being defined by content that is provided by a primary content server. The intermediate sections are interleaved between sub-sections of the main section, thus interrupting the men section for a period of time, The intermediate sections are defined by secondary content that is provided by two or more, different secondary content servers.

The linear video stream is generated by a video stream composer that can access the primary content server and the plurality of different secondary content servers.

According to the method, the video stream composer interrupts streaming of the primary content received from the primary content server in case
- a predetermined event occurs or is detected in the streamed primary and
- one of the secondary content servers provides content to be streamed during the interruption of the main video stream section,

According to the method, the video stream composer further
- triggers a pre-placement interval anteceding a predetermined event in the streamed primary content
- accesses a first secondary content server for fetching secondary content from the first secondary content server and for providing event class information to the first secondary content server, waiting for a response from the first secondary content server and
- in case a negative or no response is received from the first secondary content server, to access a second secondary content server (that is different from the first secondary content server) for providing event class information to the second secondary content server and for fetching secondary content from the second secondary content server and waiting for a response from the second secondary content server and
- triggers streaming content according to a content identifier received from the first secondary content server, in case a response from the first secondary content server was received, or streaming content according to a content identifier received from the second secondary content server, in case a negative or no response from the first secondary content server was received but a positive response from the second secondary content server was received or not to interrupt and thus continuing streaming of the primary content in case a negative or no response from the first secondary content server and a negative or no response from the second secondary content server was received.

According to a preferred embodiment, the method further comprises the step of detecting events in the streamed primary using an event detector comprising a trained neural network.

As pointed out above, a method of generating and displaying a linear video stream comprising live video streaming may comprise a step of predetermining secondary content that is to be placed in a placement interval that only is triggered, if a predetermined live event occurs. For different live trigger events, different secondary content may be predetermined.

A live trigger event may be detected by means of a trained neural network that is trained to detect the occurrence of life events the neural network is trained for. The neural network may be a classifier wherein the classes correspond to different trigger events. In case a live trigger event is detected in a live video stream, the predetermined secondary content that corresponds to the detected live trigger event is placed in the linear video stream. In the case of live trigger events, no pre-placement interval is triggered.

According to preferred embodiments of system and the method for each preplacement interval a list defining a sequence in which secondary content servers are to be accessed is provided and the secondary content servers listed in the list are addressed in the sequence defined by that list. In some embodiments the number of lists is smaller than the number of placement intervals and wherein the list to be used in a pre-placement interval is defined by rules that are coded in a script.

The list defining a sequence in which secondary content servers may be defined by a script that defines the operation of the video stream composer and therefore may be stored on te video stream composer.

An alternative method, hat can be combined with the previously disclosed method comprises the steps of:
- predetermining secondary content in relation to a trigger event,
- real-time analysis of a live video stream for detecting the trigger event in case the live video stream contains the trigger event
- triggering a placement interval in case the trigger event is detected and
- streaming the secondary content in the placement interval triggered in response t detecting the trigger event.

Preferably, real-time analysis of a live video stream and detection the trigger events is performed by a trained neural network that is trained with training data representing trigger events, The trained neural network may be a classifying neural network (i.e. a classifier) that that trained with training data representing different types of events, the different types of events corresponding to different classes the classifying neural network is trained for.

Preferably, trigger event detection comprises detecting different types of trigger events. It is further preferred if secondary content is predetermined for different types of live trigger events individually to enable trigger event type dependent playback of trigger event type specific secondary content in a placement interval following a detection of a particular type of trigger event.

The invention shall now further be illustrated by way of an example and with a reference to the figures. Of the figures,
- Fig. 1:: illustrates components of a for streaming video content to one or more audio-video-devices;
- Fig. 2:: is a schematic representation of a secondary content placement unit;
- Fig. 3.: is schematic representation of a linear video stream with main sections representing primary content and intermediate sections representing secondary content;
- Fig. 4:: is a schematic diagram of an embodiment of a method according to a first aspect of the invention; and
- Fig. 5:: is a schematic diagram of an embodiment of a method according to a second aspect of the invention.

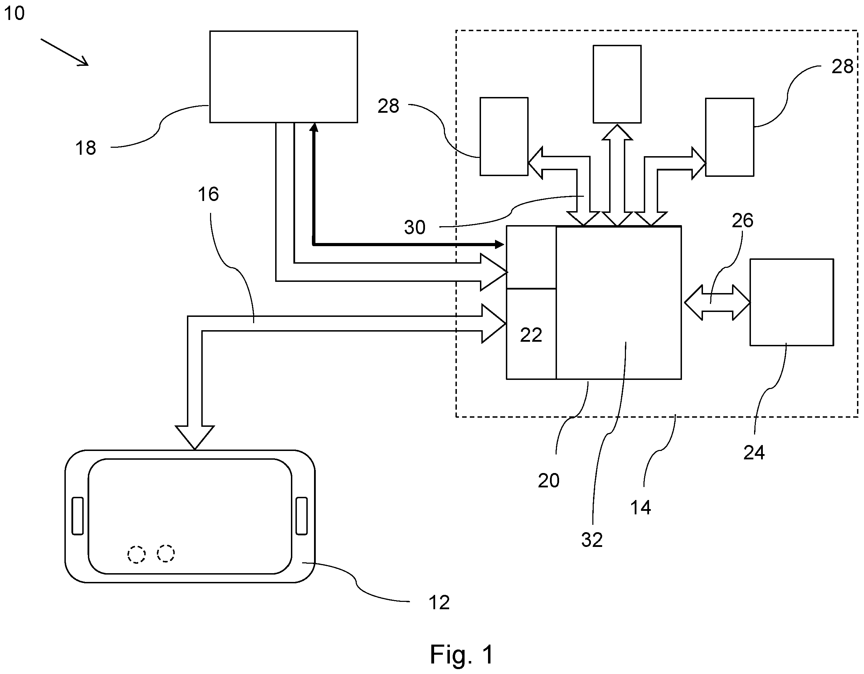

A system 10 for streaming video content to one or more audio-video-devices comprises typically a plurality of individual audio-video-devices 12 that are connected to a content distribution system 14 via one or more data communication connections 16; see figure 1. The data communication connection 16 can be wireless or wire bound. For instance, the data communication connection 16 can be part of a cable TV infrastructure that connects one or more audio-video-devices 12 to the content distribution system 14. The audio-video-devices 12 can be TV sets or portable terminals such as laptops, smartphones or the like. The audio-video-devices may be user terminals that are connected to the content distribution systems.

The content distribution system comprises a video stream composer 20 having a data interface 22 for communicating with each individual audio-video-device via the data communication connection 16. The video stream composer 20 is connected to at least one primary content source 24 via a data connection 26. The video stream composer 20 further is connected to multiple secondary content servers 28 via data connections 30.

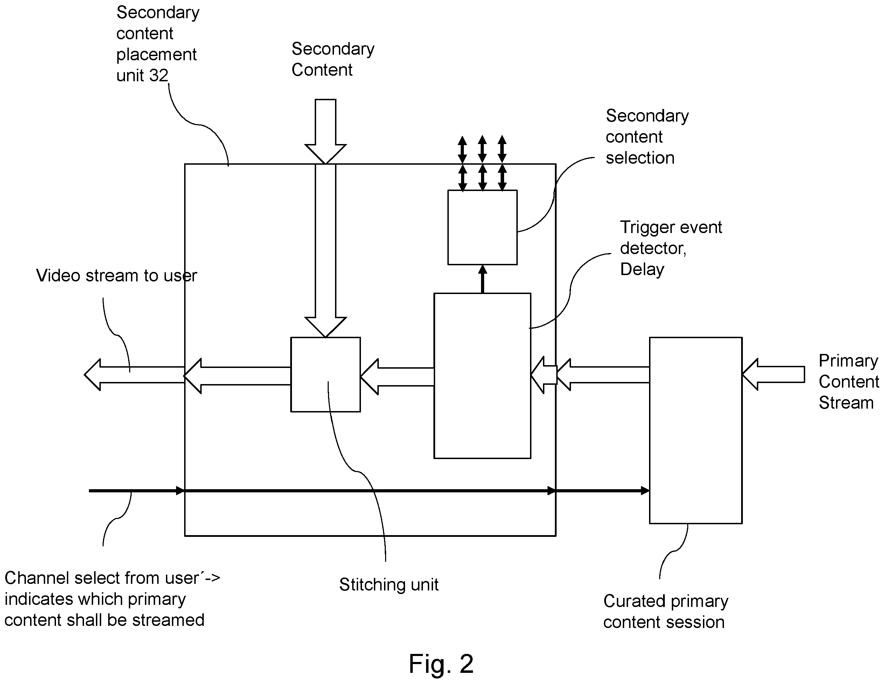

The video stream composer 20 comprises a secondary content placement unit 32 as shown in figure 2.

The secondary content placement unit 32 receives data representing primary content from a primary content source and my receive data representing secondary content from one or more secondary content sources. The primary content that is received by the secondary content placement unit 32 corresponds to a user demand. For instance, a user may have chosen a curated channel via interacting with his AV devices EPG. The user AV device may have generated a channel selection signal indicating which curated channel the user has chosen and triggering streaming of the primary content corresponding to the chosen curated channel to the user's AV device.

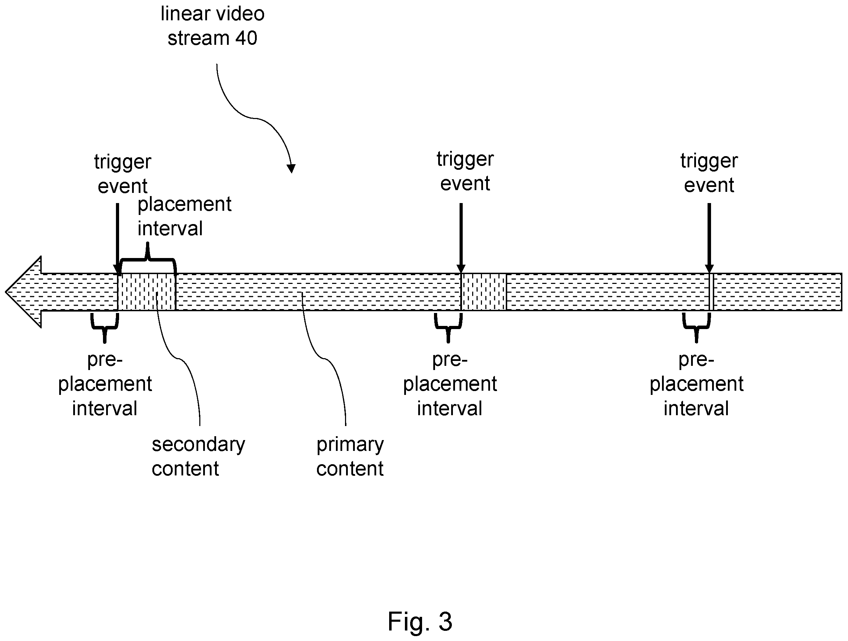

A trigger event detector 34 that is part of the secondary content placement unit 32 is configured to detect trigger events 42 that trigger a secondary content placement interval 44 (see figure 3).

A trigger event 42 can be a marker in the primary content. The trigger event 42 may also be a certain daytime. In another alternative, the trigger event 42 is a scene represented in the primary content video stream. For detecting trigger events corresponding to a certain scene in the primary video content, the trigger event detector 34 may comprise a neural network that is trained by video data representing trigger scenes to be detected.

Once a trigger event is detected, the trigger event detector triggers a pre-placement interval 46 (see figure 3) and causes a secondary content selection unit 36 to select secondary content to be streamed in the placement interval 44.

It is to be noted that the duration of the placement interval 44 is not fixed but may vary depending on the secondary content selected by the secondary content selection unit 36.

The secondary content selection unit 36 is configured to access a number of secondary content servers as specified in a script that configures the secondary content selection unit 36.

The secondary content selection unit 36 is configured to initially access a first secondary content server for fetching secondary content information from the first secondary content server and for providing event class information to the first secondary content server and waiting for a response from the first secondary content server.

In case the secondary content selection unit 36 receives a negative or no response from the first secondary content server, the secondary content selection unit 36 accesses a second secondary content server (that is different from the first secondary content server) for fetching secondary content information from the second secondary content server. The secondary content selection unit 36 provides event class information to the second secondary content server and waits for a response from the second secondary content server.

In case the secondary content selection unit 36 receives a response containing secondary content information from the first secondary content server, the secondary content selection unit 36 triggers streaming secondary content received from the first secondary content server. The secondary content information contains a secondary content identifier that enables the video stream composer 20 to access a content delivery network (CDN) 18 and trigger streaming of secondary content to the video stream composer 20. In order to adapt the format of the secondary content to the format of the primary content, i.e. with respect to the video resolution such as 720p or 1080p, resolution information may be transmitted from the video stream composer 20 to the content delivery network 18.

In case the secondary content selection unit 36 receives a negative or no response from the first secondary content server but receives a response from the second secondary content server, the secondary content selection unit 36 triggers streaming secondary content received from the first secondary content server. In case the secondary content selection unit 36 receives neither a response from the first secondary content server nor a response from the second secondary content server the secondary content selection unit 36 cancels the placement interval. According, in such case the streaming of the primary content is not interrupted. Rather, the streaming of the primary content is continued in case no response from the first secondary content server and no response from the second secondary content server or any further secondary content server was received.

It is to be noted that the secondary content selection unit 36 may be configured to access more than two different secondary content servers in a sequence that is predetermined by a script configuring the secondary content selection unit 36. However, the concept is equal for all secondary content servers.

In order to avoid an interruption of the linear video stream, the secondary content selection unit 36 is configured to delay forwarding the primary content at least as long as the pre-placement interval may take.

For placing selected secondary content in the linear video stream 40, the video stream composer 20 comprises a stitching unit 38 that receives both, primary and secondary content to be streamed

A method of generating and displaying a linear video stream may be initiated by a user interacting with a user's client device 12.

The user's client device 12 may be configured to provide an electronic program guide (EPG) that shows the user available channels the user can choose from.

Once a user chooses a channel and interacts with his or her client device 12 accordingly the client device 12 generates a signal that is transmitted to the video stream composer 20 and that indicates which channel the user has chosen. The chosen channel determines which primary content shall be streamed to the user's client device 12.

Accordingly, the user is able to choose a primary content he wants to watch by means of a user interaction with the user's client AV device 12.

Once the video stream composer 20 receives a signal from a client device 12 indicating that a primary content is to be streamed to that client device 12, the video stream composer 20 initiates streaming of the primary content from a primary content source 24 to the users device 12 via the video stream composer 20.

During streaming of a primary content (as chosen by the user) to the user's client device, the video stream composer 20 detects trigger events for placing secondary content in the video stream. The trigger events can be time marks related to the primary content or to the daytime. The trigger events can also be events within the streamed primary content for instance particular scenes that occur within the primary content and that can be detected by analyzing the primary content for instance by means of a trained neural network. The secondary content to be placed within the stream of the primary content may relate to the primary content and in particular to certain scenes detected within the primary content. For instance, the secondary content may contain explanations with respect to the primary content or additional information the user might need when watching the primary content. If the primary content for instance is a video stream representing some sort of sports game, the secondary content might contain information about rules that are applicable to a certain scene in the sports game. Information about the secondary content is provided by secondary content servers 28. The information about the secondary content as provided by secondary content servers 28 may contain a secondary content identifier and the video stream composer 20 is configured to access secondary content sources using the secondary content identifier received from the secondary content server 28. The details of accessing the secondary content server 28 are defined by rules that are coded and stored in a video stream composer's 20 settings memory. The rules included information about the secondary content servers that are to be accessed for determining secondary content in the pre-placement interval prior to a detected event and about the sequence, in which these servers are to be accessed. The details of accessing the secondary servers 28, obtaining the secondary content to be placed and the stitching of the primary and the secondary content for generating a continuous video stream are described further below.

Once the video stream composer 20 has determined which secondary content is to be placed within the video stream, the video stream composer will receive the secondary content from the respective secondary content source - for instance a content delivery network 18 - and place the secondary content in the placement interval as indicated by the trigger event. Within a particular placement interval, more than one secondary content may be placed. This is also determined by the coded settings stored in the video stream composer's settings memory.

The rules based on which the video stream composer 20 may access the secondary content servers can be defines by a script. The script allows to define one or more lists that each define a sequence in which secondary content servers are to be addressed.

The script further allows defining the rules which list is used in case a trigger event occurs. If for instance two lists are defined by the script, the lists may be used alternatingly, i.e. each list may be used every other trigger event.

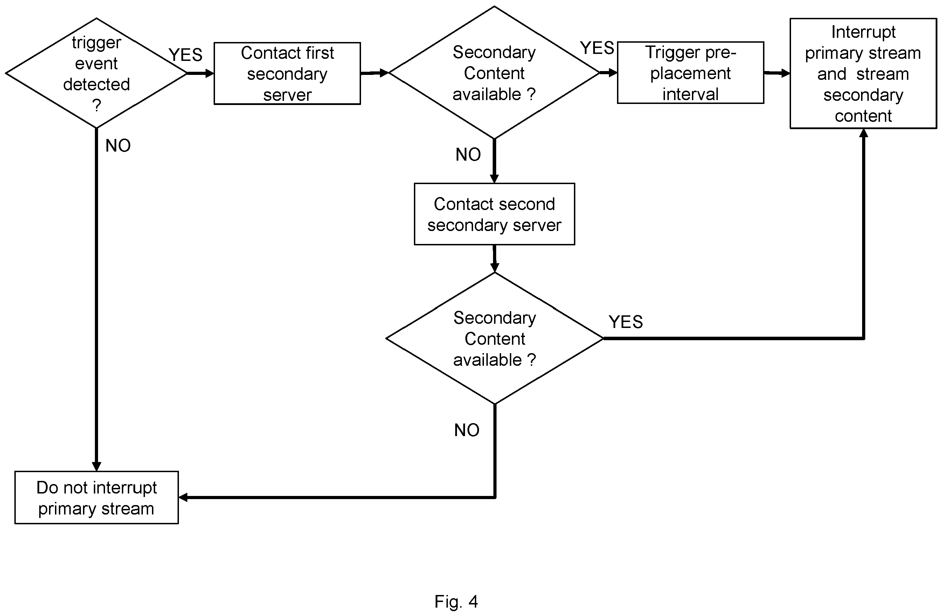

Figure 4 schematically illustrates the steps of a method of generating and displaying a linear video stream according to a first aspect:

| | |
|---|---|
| S1 | generating a linear video stream by a video stream composer that can access the primary content server and the plurality of different secondary content servers |
| S2 | interrupting streaming of the primary content received from the primary content server in case |
| | - a predetermined event occurs or is detected in the streamed primary and |
| | - one of the secondary content servers provides content to be streamed during the interruption of the main video stream section, |
| S3 | triggering a pre-placement interval anteceding a predetermined event in the streamed primary content |
| S4.1 | accessing a first secondary content server for fetching secondary content information from the first secondary content server and for providing event class information to the first secondary content server, waiting for a response from the first secondary content server |
| S5.1 | triggering streaming secondary content according to secondary content information received from the first secondary content server, in case a positive response from the first secondary content server, |
| S4.2 | in case a negative or no response is received from the first secondary content server, accessing a second secondary content server for providing event class information to the second secondary content server and for fetching secondary content from the second secondary content server and waiting for a response from the second secondary content server and |
| S5.2 | triggering streaming of secondary content according to secondary content information received from the second secondary content server, in case a negative or no response from the first secondary content server was received but a positive response from the second secondary content server was received or |
| S6 | not to interrupt and thus continuing streaming of the primary content in case a negative or no response from the first secondary content server and a negative or no response from the second secondary content server was received. |

As pointed out above, the linear video stream is composed of main sections and intermediate sections, wherein the main sections being defined by content that is provided by a primary content server and the intermediate sections are interleaved between sub-sections of the main section and thus interrupting the main section for a period of time. The intermediate sections are defined by content that is provided by two or more, different secondary content servers

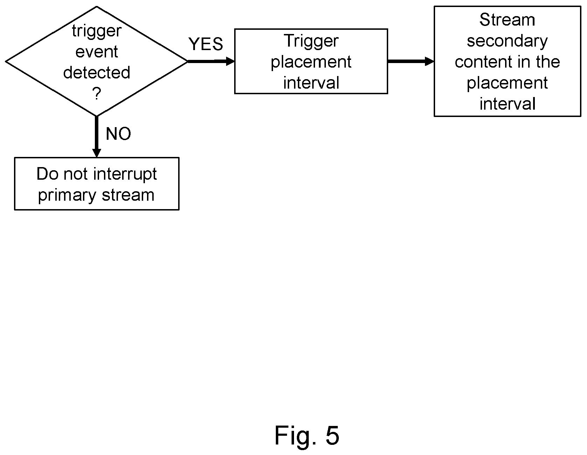

Figure 5 schematically illustrates the steps of a method of generating and displaying a linear video stream according to a second aspect that can be combined with the first aspect.

| | |
|---|---|
| S10 | predetermining secondary content in relation to a trigger event, |
| S12 | analyzing a live video stream in real-time for detecting the trigger event in case the live video stream contains the trigger event |
| S14 | triggering a placement interval in case the trigger event is detected and |
| S16 | streaming the secondary content in the placement interval triggered in response to detecting the trigger event. |

According to a preferred embodiment, real-time analysis of a live video stream and detection the trigger events is performed by a trained neural network that is trained with training data representing trigger events, The trained neural network preferably is part of the video stream composer 20.

According to a further preferred embodiment, trigger event detection comprises detecting different types of trigger events. It is even further preferred if secondary content is predetermined for different types of live trigger events individually to enable trigger event type dependent playback of trigger event type specific secondary content in a placement interval following a detection of a particular type of trigger event.

For detecting different types of trigger events, the trigger event detector 34 may be a trained neural network, in particular a classifier, that is trained with training data representing different types of trigger events wherein each type of trigger event defines a class for which the classifying neural network is trained..

### Reference numerals

- 10: system for streaming video content
- 12: client device, AV device
- 14: content distribution system
- 16: data connection
- 18: content delivery network
- 20: video stream composer
- 22: data interface
- 24: primary content source
- 26: data connection
- 28: secondary content server
- 30: data connection
- 32: secondary content placement unit
- 34: trigger event detector
- 36: secondary content selection unit
- 38: stitching unit
- 40: linear video stream
- 42: trigger event
- 44: placement interval
- 46: pre-placement interval

## Claims

1. System for generating a linear video stream and displaying the linear video stream on a user's audio-video-device,
said system comprising one or more audio-video-device, each audio-video-device comprising
- at least a display for displaying the content of the linear video stream,
- a user interface that is configured for receiving user interactions, said user interaction at least comprising interactions for controlling the playback of the linear video stream
- a bidirectional data interface for receiving the linear video stream and for sending out data representing user interactions entered by a user via the user interface
wherein the linear video stream is composed of main sections and intermediate sections,
said main sections being defined by primary content that is provided by a primary content server
said intermediate sections being interleaved between sub-sections of the main section, thus interrupting the main section for a period of time,
said intermediate sections being defined by secondary content that is provided by two or more, different secondary content servers
said linear video stream being generated by a video stream composer that can access the primary content server and the plurality of different secondary content servers and that generates a continuous linear video stream comprised of a) one or more main sections that are divided in sub-sections and b) intermediate sections that are interleaved between the sub-sections of the main sections.
said video stream composer being configured to interrupt streaming of the primary content received from the primary content server for seamlessly streaming secondary content in case
- a predetermined trigger event occurs or is detected in the streamed primary and
- one of the secondary content servers provides content to be streamed during the interruption of the main video stream section,
said video stream composer being configured
- to trigger a pre-placement interval anteceding a predetermined trigger event in the streamed primary content
- to access a first secondary content server for providing event class information to the first secondary content server and fetching secondary content information from the first secondary content server and for waiting for a response from the first secondary content server and
- in case a negative or no response is received from the first secondary content server, to access a second secondary content server for providing event class information to the second secondary content server and fetching secondary content from the second secondary content server and for waiting for a response from the second secondary content server and
- to trigger streaming secondary content according to secondary content information received from the first secondary content server, in case a positive response containing secondary content information from the first secondary content server was received, or streaming secondary content according to secondary content information received from the second secondary content server, in case a negative or no response from the first secondary content server was received but a positive response from the second secondary content server was received or not to interrupt and thus continuing streaming of the primary content in case a negative or no response from the first secondary content server and a negative or no response from the second secondary content server or any further secondary content server was received.

2. System according to claim 1, wherein the video stream composer comprises a trigger event detector that receives the streamed primary content and that is configured to detect trigger events in the streamed primary content.

3. System according to claim 2, wherein the trigger event detector comprises a trained neural network that is a classifier being trained with training data representing trigger events.

4. System according to at least one of claims 1 to 3, wherein the predetermined trigger events are categorized in different event classes.

5. System according to at least one of claims 1 to 4, wherein a sequence of accessing the secondary media content servers during the pre-placement interval is defined by settings stored in the video stream composer.

6. System according to claim 5, wherein at least two different sequences of accessing the secondary media content servers during the pre-placement interval are defined by settings stored in the video stream composer and wherein the video stream composer is configured to apply the sequences alternatingly according to a ratio that is also defined by the settings stored in the video stream composer

7. System according to at least one of claims 1 to 6, wherein the secondary content information provided with a positive response from a secondary content server comprises a content identifier identifying an individual secondary content to be place in the placement interval defining the respective intermediate section of the linear video stream.

8. System according to at least one of claims 1 to 6, wherein the primary content forms a curated channel and wherein the curated channel is configured to be displayed in an electronic program guide of a client AV device.

9. System according to claim 8, wherein the primary content forms a curated channel comprises primary content representing a live event.

10. System for generating a linear video stream and displaying the linear video stream on a user's audio-video-device,
said system comprising one or more audio-video-device, each audio-video-device comprising
- at least a display for displaying the content of the linear video stream,
- a user interface that is configured for receiving user interactions, said user interaction at least comprising interactions for controlling the playback of the linear video stream
- a bidirectional data interface for receiving the linear video stream and for sending out data representing user interactions entered by a user via the user interface
wherein the linear video stream is composed of main sections and intermediate sections,
said main sections being defined by primary content that is provided by a primary content server
said intermediate sections being interleaved between sub-sections of the main section, thus interrupting the main section for a period of time,
said intermediate sections being defined by secondary content that is provided by two or more, different secondary content servers
said linear video stream being generated by a video stream composer that can access the primary content server and the plurality of different secondary content servers and that generates a continuous linear video stream comprised of a) one or more main sections that are divided in sub-sections and b) intermediate sections that are interleaved between the sub-sections of the main sections.
said video stream composer being configured to interrupt streaming of the primary content received from the primary content server for seamlessly streaming secondary content in case
- a predetermined trigger is detected in the streamed primary and
- predetermined secondary to be streamed in response to a detected trigger event exists,
said video stream composer being further configured for
- analyzing a live video stream in real-time for detecting the trigger event in case the live video stream contains the trigger event
- triggering a placement interval in case the trigger event is detected and
- streaming the predetermined secondary content in the placement interval triggered in response t detecting the trigger event.

11. Method of generating and displaying a linear video stream,
wherein the linear video stream is composed of main sections and intermediate sections,
said main sections being defined by content that is provided by a primary content server
said intermediate sections be interleaved between sub-sections of the main section, thus interrupting the men section for a period of time,
said intermediate sections being defined by content that is provided by two or more, different secondary content servers
said linear video stream being generated by a video stream composer that can access the primary content server and the plurality of different secondary content servers
wherein the video stream composer interrupts streaming of the primary content received from the primary content server in case
- a predetermined event occurs or is detected in the streamed primary and
- one of the secondary content servers provides content to be streamed during the interruption of the main video stream section,
wherein the video stream composer
- triggers a pre-placement interval anteceding a predetermined event in the streamed primary content
- accesses a first secondary content server for fetching secondary content information from the first secondary content server and for providing event class information to the first secondary content server, waiting for a response from the first secondary content server and
- in case a negative or no response is received from the first secondary content server, to access a second secondary content server for providing event class information to the second secondary content server and for fetching secondary content from the second secondary content server and waiting for a response from the second secondary content server and
- triggers streaming secondary content according to secondary content information received from the first secondary content server, in case a positive response from the first secondary content server, or streaming secondary content according to secondary content information received from the second secondary content server, in case a negative or no response from the first secondary content server was received but a positive response from the second secondary content server was received or not to interrupt and thus continuing streaming of the primary content in case a negative or no response from the first secondary content server and a negative or no response from the second secondary content server was received.

12. Method according to claim 11, wherein the method further comprises the step of detecting events in the streamed primary using an event detector comprising a trained neural network.

13. Method according to claim 11 or 12, wherein for each preplacement interval a list defining a sequence in which secondary content servers are to be accessed is provided and the secondary content servers listed in the list are addressed in the sequence defined by that list.

14. Method according to claim 13, wherein the number of lists is smaller than the number of placement intervals and wherein the list to be used in a pre-placement interval is defined by rules that are coded in a script.

15. Method of generating and displaying a linear video stream comprising the steps of
- predetermining secondary content in relation to a trigger event,
- analyzing a live video stream in real-time for detecting the trigger event in case the live video stream contains the trigger event
- triggering a placement interval in case the trigger event is detected and
- streaming the secondary content in the placement interval triggered in response t detecting the trigger event.
